# EUROPÄISCHE PATENTANMELDUNG

(11) **EP 0 724 155 A2**
(43) Veröffentlichungstag der Anmeldung: **31.07.1996**
(21) Anmeldenummer: 96100352.2
(22) Anmeldetag: 10.01.1996
(51) Int. Cl.: G01N 29/26, G01M 3/00

(54) **Verfahren und Vorrichtung zum Prüfen von gasführenden Rohrleitungen**

(30) Priorität: 30.01.1995 DE 19502764
(71) Anmelder: Pipetronix GmbH, D-76297 Stutensee (DE)
(72) Erfinder: Goedecke, Hartmut, D-35781 Weilburg / Kubach (DE)
(74) Vertreter: Lempert, Jost, Dipl.-Phys. Dr. rer.nat.

(57) **Zusammenfassung**

Zur Reduzierung der Mitführung von Kopplungsflüssigkeit bei Durchführung eines Prüflaufes einer Vorrichtung zum Prüfen von gasführenden Rohrleitungen durch eine solche sieht die Erfindung ein Verfahren zum Prüfen von gasführenden Rohrleitungen mittels Ultraschall vor, bei dem in einem durch die Wandung der Rohrleitung und Molchmanschetten abgegrenzten, einen Sensorträger mit Ultraschallsensoren und eine Kopplungsflüssigkeit enthaltenden Raum ein Überdruck erzeugt wird. Eine Vorrichtung zum Prüfen von gasführenden Rohrleitungen mittels Ultraschall, mit einem Sensorträger und mit einer vor diesem angeordneten und mit diesem verbundenen Molchmanschette ist dadurch gekennzeichnet, daß von einem Bereich vor der Molchmanschette (22) zu einem Bereich hinter der Molchmanschette (22) eine mit einer Pumpe (26) versehene Verbindungsleitung (24) führt.

## Beschreibung

Die Erfindung betrifft ein Verfahren zum Prüfen von gasführenden Rohrleitungen mittels Ultraschall sowie eine Vorrichtung zum Prüfen von gasführenden Rohrleitungen mittels Ultraschall, mit einem Sensorträger und mit einer hinter diesem angeordneten und mit diesem verbundenen Molchmanschette.

Eine Materialprüfung mittels Ultraschall benötigt eine Kopplungsflüssigkeit. Zum Prüfen von gasführenden Rohrleitungen (Pipelines) mittels Ultraschall müssen daher die Sensoren und damit auch ein diese tragender Sensorträger in Flüssigkeit eingetaucht sein. Es muß daher bei einem Meßlauf einer Vorrichtung zum Prüfen von Ultraschall durch die an sich gasführende Rohrleitung ein Flüssigkeitspfropfen mitgeführt werden, der als "Batch" bezeichnet wird. Der Pfropfen wird gemäß Stand der Technik mitgeführt, indem mit großem Abstand vor und hinter der eigentlichen Meßvorrichtung mit Dichtmanschetten versehene Trenn-Molche mitgeführt werden, die den Flüssigkeitspfropfen und die Ultraschall-Meßvorrichtung (Ultraschall-Molch) zwischen sich einschließen.

Ein solcher Flüssigkeitspfropfen oder Batch muß eine erhebliche Länge aufweisen. Bei üblichen Laufwegen von mehreren hundert Kilometern muß die Batch-Länge 200 bis 2000 m betragen. Ein üblicher Batchaufbau weist vor dem eigentlichen Meß-Molch vier bis fünf Trenn-Molche mit Abständen untereinander von 20 bis 100 m und hinter dem Meß-Molch noch mindestens 2 Trenn-Molche mit einem entsprechenden Relativabstand auf. Der Abstand des Meß-Molches zu dem nächsten vor ihm laufenden Trenn-Molch beträgt z.B. 200 m und hinter ihm zu dem ersten nachfolgenden Trenn-Molch 600 m. Die Gesamtlänge beträgt hier also ca. 1000 m. Insbesondere der Abstand zwischen dem Meß-Molch und dem ersten nachfolgenden Trenn-Molch ist wichtig, da aufgrund des beim Lauf durch die Rohrleitung gegebenen Flüssigkeitslaufes ansonsten die Gefahr besteht, daß der nachfolgende Trenn-Molch während des Laufes gegen den Meß-Molch gedrückt wird und die an seinem rückwärtigen Ende befindliche Sensoranordnung zerstört. Die erforderliche große Flüssigkeitsmenge zur Durchführung eines Meßlaufes ist insbesondere für den Rohrleitungsbetreiber mit erheblichen Nachteilen verbunden: So muß in die gasführende Rohrleitung eine große Masse an Flüssigkeit eingebracht werden. Dies ist mit hohen Kosten für die Beschaffung und Einbringung, mit hohen Kosten für das Flüssigkeitsmaterial selbst und mit erheblichen Kosten für die Entsorgung verbunden, da die Flüssigkeit bei dem Durchdrücken durch die Rohrleitung verunreinigt wird.

Der Erfindung liegt daher die Aufgabe zugrunde, ein Verfahren und eine Vorrichtung zum Prüfen von gasführenden Rohrleitungen mittels Ultraschall zu schaffen, die die vorgenannten Nachteile vermeiden und insbesondere die Durchführung der Überprüfung mit einer erheblich geringeren Flüssigkeitsmenge ermöglichen.

Erfindungsgemäß wird die genannte Aufgabe bei einem Verfahren der eingangs genannten Art dadurch gelöst, daß in einem durch die Wandung der Rohrleitung und Molchmanschetten abgegrenzten, einen Sensorträger mit Ultraschallsensoren und eine Kopplungsflüssigkeit enthaltenden Raum ein Überdruck erzeugt wird. Eine erfindungsgemäße Vorrichtung sieht zur Lösung der Aufgabe vor, daß von einem Bereich vor der Molchmanschette zu einem Bereich hinter der Molchmanschette eine mit einer Pumpe versehene Verbindungsleitung führt.

Durch die erfindungsgemäßen Maßnahmen wird erreicht, daß der die Ultraschallsensoren tragende Sensorträger der Vorrichtung sich immer in einem Flüssigkeitspfropfen befindet, der gegenüber anderen Bereichen des mitgeführten Flüssigkeitspfropfens (Batches), insbesondere vor der genannten Molchmanschette, aber auch gegenüber nachfolgenden Molchmanschetten einen Überdruck aufweist. Hierdurch wird die Gefahr der Bildung von Gasblasen in dem Bereich, in dem sich der Sensorträger befindet, reduziert; in diesen eindringende bzw. entstehende Gasblasen können durch den Überdruck schnell aus diesem Bereich herausgefördert werden. Dies wird insbesondere dadurch unterstützt, daß Molch- und/oder Dichtmanschetten in ihrem oberen Bereich einen Flüssigkeitsdurchlaß aufweisen, wobei entweder der Flüssigkeitsdurchlaß durch eine Schwächung der Materialstärke der Molch- und/oder Dichtmanschetten in ihrem Umfangsbereich gebildet ist oder im oberen Umfangsbereich der Manschette eine Axialkerbe vorgesehen ist.

In weiterer Ausbildung sieht die Erfindung vor, daß ein Einlaß der Verbindungsleitung unterhalb einer Mittelachse der Vorrichtung mündet; hierdurch wird die Wahrscheinlichkeit erhöht, daß die Pumpe nur Flüssigkeit aus dem Raum vor dem Molch ansaugt.

Eine weitere Ausgestaltung der Erfindung sieht vor, daß die Verbindungsleitung durch zwei mit Abstand zueinander hintereinander angeordnete, beide vor dem Sensorträger befindliche Molchmanschetten geführt ist; in äußerst bevorzugter Ausbildung ist vorgesehen, daß hinter dem Sensorträger mit diesem axial verbunden Dichtmanschetten vorgesehen sind; wenn die dem Sensorträger nachfolgenden Dichtmanschetten durch eine starre axiale Vorrichtung (wenn auch gelenkig beweglich) mit dem Sensorträger verbunden sind, so wird ein Auflaufen der Dichtmanschetten auf den Sensorträger und damit eine Beschädigung desselben verhindert.

Durch die gesamten Maßnahmen kann die Länge des mitzuführenden Flüssigkeitspfropfens erheblich reduziert werden. Eine typische Gesamtlänge eines bei der erfindungsgemäßen Vorrichtung erforderlichen Flüssigkeitspfropfens oder Batches vom vordersten Trenn-Molch bis zu den rückwärtigen Dichtmanschetten beträgt etwa 50 bis 100 m bei gleicher Lauflänge wie sie eingangs erwähnt wurde.

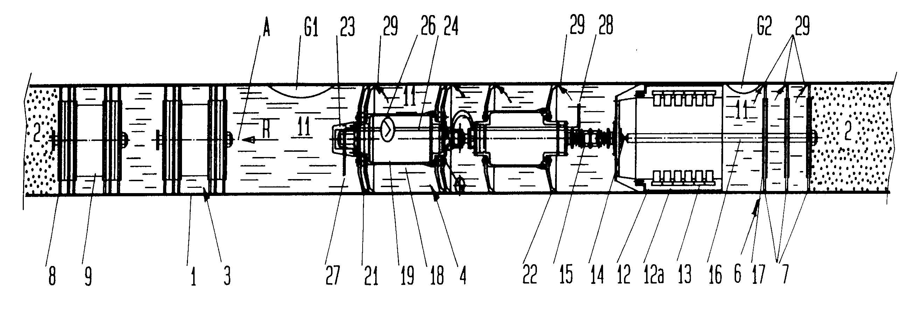

Weitere Vorteile und Merkmale der Erfindung ergeben sich aus den Ansprüchen und aus der nachfolgenden Beschreibung, in der ein Ausführungsbeispiel der erfindungsgemäßen Vorrichtung unter Bezug auf die Zeichnung im einzelnen erläutert ist. Dabei zeigt die einzige Figur:
eine bevorzugte Ausgestaltung der erfindungsgemäßen Vorrichtung zum Prüfen von gasführenden Rohrleitungen.

Die Figur zeigt eine Rohrleitung 1, die an sich ein Gas 2 führt. Wenn die Rohrleitung mittels Ultraschall auf Fehler, wie Korrosionen, Risse oder dergleichen, geprüft werden soll, so ist in bekannter Weise zunächst ein Trenn-Molch 3 vorgesehen. In Durchflußrichtung R des Gases hinter dem Trenn-Molch 3 ist eine erfindungsgemäße Vorrichtung zum Prüfen der gasführenden Rohrleitung 1, kurz ein Ultraschall-Molch 4, vorgesehen. Im dargestellten Ausführungsbeispiel trägt der Molch 4 an seinem dem Trenn-Molch 3 abgewandten, in Flußrichtung R rückwärtigen Ende (bei 6) Dichtmanschetten 7, hier in Form von Dichtscheiben.

Der Trenn-Molch 3 weist ebenfalls Dichtmanschetten oder -scheiben 8 sowie einen diese tragenden Manschettenträger 9 auf. Zwischen dem Trenn-Molch 3 und den Dichtmanschetten 7 befindet sich eine Flüssigkeit 11 als Kopplungsmedium für den zur Prüfung der Rohrleitung verwendeten Ultraschall. Die Dichtmanschetten 7, 8 dichten derart die einen Pfropfen in der Rohrleitung 1 bildende Flüssigkeit gegenüber dem an sich vor dem Trenn-Molch 3 und hinter den Dichtmanschetten 7 durch die Rohrleitung 1 geförderten Gas 2 ab.

Eine solche Anordnung mit einem Flüssigkeitspfropfen gegenüber dem umgebenden Gas abdichtenden Dichtmanschetten und einem zwischen diesen angeordneten Meßmolch an sich wird auch als Batch bezeichnet.

Die erfindungsgemäße Vorrichtung, der Molch 4, weist einen Sensorträger 12 mit Ultraschallsensoren 13 auf. Die Dichtmanschetten 7 sind mit dem Sensorträger 12 über ein Gelenk 14 gelenkig, aber mit festem axialem Abstand verbunden, der durch eine Trägerstange 16 bestimmt ist, auf der die Manschetten 7 tragende starre Scheiben 17 fest angeordnet sind.

Der Sensorträger 12 mit den Sensoren 13 ist in an sich bekannter Weise ausgebildet, wie er beispielsweise aus der EP 255 619 bekannt ist.

Vor dem Sensorträger 12 befindet sich, ebenfalls über ein Gelenk 15 mit ihm verbunden, ein Manschettenträger 18, der in einem Gehäuse 19 beispielsweise die gesamte Elektronik, Speichermedien etc. enthalten kann. Der Manschettenträger 18 trägt im dargestellten Ausführungsbeispiel zwei Molchmanschetten 21, 22. An seinem vorderen Ende (in Flußrichtung R) ist er mit einem Auflaufschutz 23 versehen. Dieser dient dazu, eine Beschädigung von Komponenten des Meß-Molches 4 zu vermeiden, wenn die Flüssigkeit zwischen diesem und dem Trenn-Molch 3 während des Laufs des Molches so sehr reduziert wurde, daß der Meß-Molch 4 gegen den Trenn-Molch 3 stößt.

Von dem Bereich vor der vorderen Molchmanschette 21 bis in den Bereich hinter der hinteren Molchmanschette 22 (in Durchflußrichtung R gesehen) erstreckt sich eine Verbindungsleitung 24, in der eine Pumpe 26 angeordnet ist, die Flüssigkeit aus dem Bereich zwischen dem Trenn-Molch 3 und der vorderen Molchmanschette 21 in den Bereich zwischen hinterer Molchmanschette 22 und rückwärtigen Dichtmanschetten 7, in dem sich der Sensorträger 12 mit den Ultraschall-Sensoren 13 befindet, durch die Verbindungsleitung pumpt.

Der Einlaß 27 der Verbindungsleitung 24 liegt in einem unteren Bereich der Rohrleitung 1 bzw. des Meß-Molches 4, auf jeden Fall unterhalb der Symmetrieachse A der Rohrleitung 1 bzw. des Molches 4. Ein Auslaß 28 der Verbindungsleitung 24 liegt im Bereich zwischen hinterer Molchmanschette 22 und vorderer Dichtmanschette 7.

Bei 29 weisen die Molch- und Dichtmanschetten 21, 22, 7 kleine Flüssigkeitsdurchlässe auf. Diese können durch Schwächungen des Manschettenumfangs oder durch eine kleine V-förmige Einkerbung im Umfangsbereich der Manschetten 7, 21, 22 gebildet sein.

In der Zeichnung sind noch Gasblasen G1 und G2 dargestellt. Es sei noch erwähnt, daß der Sensorträger 12 in seinem achsparallelen Bereich 12a, der die Sensoren 13 trägt, entweder im äußeren Bereich Längsnuten aufweisen kann oder aber die Träger ohnehin als einzelne Finger oder Arme mit radialen Durchbrechungen zwischen ihnen ausgebildet sind.

Während des Laufs der gesamten Anordnung 3, 4 wird durch die Pumpe 26 permanent Flüssigkeit aus dem Raum vor dem Meß-Molch 4 in den Raum um den Sensorträger 12 mit seinen Sensoren 13 gepumpt und in diesem Raum ein Überdruck erzeugt. Dadurch, daß die Flüssigkeit über den Einlaß 27 im unteren Bereich der Rohrleitung 1 angesaugt wird und der genannte Überdruck im Bereich des Sensorträgers erzeugt wird, wird sichergestellt, daß sich in diesem keine Gasblasen befinden bzw. daß auftretende Gasblasen, wie eine Gasblase G2, aus dem den Sensorträger 12 umgebenden Raum durch die Schwächungsbereiche 29 der Manschetten 22, 21 und 7 herausgedrückt werden. Es wird damit verhindert, daß Gasblasen sich lange im den Sensorträger 12 umgebenden Raum aufhalten, insbesondere zwischen den Sensoren 13 und der Rohrwandung der Rohrleitung 1 und daher über eine längere Zeit die Messungen verschlechtern oder verunmöglichen. Weiterhin wird durch den in der beschriebenen Weise im den Sensorträger 12 umgebenden Raum erzeugten Überdruck verhindert, daß in der Flüssigkeit vor der erfindungsgemäßen Vorrichtung (dem Molch 4) befindliche Gasblasen, wie eine Gasblase G1, überhaupt eindringen; solche Gasblasen G1, G2 können durch Abzweige in der Rohrleitung entstehen, in die beim Vorbeifahren der Anordnung Wasser hineinschwappt, wodurch Gas in den "Batch" mitgenommen wird.

Durch die genannten Maßnahmen und die hierdurch bedingte Kontrolle von Gasblasen wird erreicht, daß die gesamte durch die Anordnung mitgeführte Kopplungsflüssigkeit bei einer vorgegebenen Strecke wesentlich geringer sein kann, als dies bei herkömmlichen Vorrichtungen zum Prüfen von gasführenden Leitungen mittels Ultraschall der Fall ist, bei denen eine Vielzahl von Trenn-Molchen vor und hinter der eigentlichen Vorrichtung zum Prüfen in einem wesentlich größeren Abstand vorhanden sein müssen. Durch die axial feste Verbindung der rückwärtigen Dichtmanschetten 7 mit der Vorrichtung zum Prüfen wird eine wesentlich größere Erstreckungslänge der Flüssigkeit hinter der eigentlichen Meß-Vorrichtung 4 vermieden, die bei bekannten Anordnungen vorgesehen sein muß, um ein Auflaufen der rückwärtigen Trenn-Molche auf den Meß-Molch zu verhindern, da dies zur Zerstörung desselben führen könnte.

## Patentansprüche

1. Verfahren zum Prüfen von gasführenden Rohrleitungen mittels Ultraschall, dadurch gekennzeichnet, daß in einem durch die Wandung der Rohrleitung und Molchmanschetten abgegrenzten, einen Sensorträger mit Ultraschallsensoren und eine Kopplungsflüssigkeit enthaltenden Raum ein Überdruck erzeugt wird.

2. Vorrichtung zum Prüfen von gasführenden Rohrleitungen mittels Ultraschall, mit einem Sensorträger und mit einer vor diesem angeordneten und mit diesem verbundenen Molchmanschette, dadurch gekennzeichnet, daß von einem Bereich vor der Molchmanschette (22) zu einem Bereich hinter der Molchmanschette (22) eine mit einer Pumpe (26) versehene Verbindungsleitung (24) führt.

3. Vorrichtung nach Anspruch 2, dadurch gekennzeichnet, daß ein Einlaß (27) der Verbindungsleitung (24) unterhalb einer Mittelachse (A) der Vorrichtung (4) mündet.

4. Vorrichtung nach Anspruch 2 oder 3, dadurch gekennzeichnet, daß ein Auslaß (28) der Verbindungsleitung (24) in dem Bereich zwischen hinterer Molchmanschette (22) und vorderer Dichtmanschette (7) mündet.

5. Vorrichtung nach einem der Ansprüche 2 bis 4, dadurch gekennzeichnet, daß die Verbindungsleitung (24) durch ein oder mehrere mit Abstand zueinander hintereinander angeordnete, beide vor dem Sensorträger (12) befindliche Molchmanschetten (21, 22) geführt ist.

6. Vorrichtung nach einem der Ansprüche 2 bis 5, dadurch gekennzeichnet, daß hinter dem Sensorträger (12) mit diesem axial verbunden Dichtmanschetten (7) vorgesehen sind.

7. Vorrichtung nach einem der Ansprüche 2 bis 6, dadurch gekennzeichnet, daß Molch- und/oder Dichtmanschetten (7, 21, 22) in ihrem oberen Bereich einen Flüssigkeitsdurchlaß (29) aufweisen.

8. Vorrichtung nach Anspruch 7, dadurch gekennzeichnet, daß der Flüssigkeitsdurchlaß durch eine Schwächung der Materialstärke der Molch- und/oder Dichtmanschetten (7, 21, 22) in ihrem Umfangsbereich gebildet ist.

9. Vorrichtung nach Anspruch 7, dadurch gekennzeichnet, daß im oberen Umfangsbereich der Manschette eine Axialkerbe vorgesehen ist.

10. Vorrichtung nach einem der vorangehenden Ansprüche, dadurch gekennzeichnet, daß der Antrieb der Pumpe (26) durch Batterien erfolgt.

11. Vorrichtung nach einem der vorangehenden Ansprüche, dadurch gekennzeichnet, daß der Antrieb der Pumpe (26) über Reibräder erfolgt.

12. Vorrichtung nach einem der Ansprüche 3 bis 11, dadurch gekennzeichnet, daß der Einlaß (27) derart gelegt ist, daß er auch bei sich um seine Längsachse drehendem Molch in einer Position unterhalb der Mittelachse (A) bleibt.
